# EUROPÄISCHE PATENTSCHRIFT

(11) **EP 1 002 317 B1**
(45) Veröffentlichungstag und Bekanntmachung des Hinweises auf die Patenterteilung: **01.08.2001**
(21) Anmeldenummer: 98924005.6
(22) Anmeldetag: 13.03.1998
(51) Int. Cl.: G11B 33/02

(54) **KASSETTEN- ODER RADIOREKORDER MIT KASSETTENSCHACHT**
AUDIOTAPE CASSETTE OR RADIO/CASSETTE RECORDER COMPRISING A HOUSING FOR CASSETTE
MAGNETOPHONE A CASSETTES OU RADIOCASSETTE COMPORTANT UN LOGEMENT POUR CASSETTE

(30) Priorität: 08.08.1997 DE 19734313
(43) Veröffentlichungstag der Anmeldung: 24.05.2000
(73) Patentinhaber: ROBERT BOSCH GMBH, 70442 Stuttgart (DE)
(72) Erfinder: BUEHREN, Rainer, D-38239 Salzgitter (DE)
(86) Internationale Anmeldenummer: DE9800750
(87) Internationale Veröffentlichungsnummer: WO9908283

(56) Entgegenhaltungen:
- DE-A- 4 404 526
- DE-C- 4 117 929

## Beschreibung

### Stand der Technik

Die Erfindung geht von der Gattung aus, wie im unabhängigen Anspruch 1 angegeben (vgl. US-A-3 800 328).

Im Handel befindliche Autoradios enthalten beispielsweise einen solchen Kassettenrekorder.
Wenn eine Kassette abgespielt werden soll, wird diese gegen die federnd geschlossene Schachtabdeckung gedrückt und in den Schacht geschoben. Dabei schleift die Schachtabdeckung auf der Kassette. Wenn die Kassette am Schachtende angelangt ist, wird sie auf das Laufwerk abgesenkt. Dabei hält eine Nase an der Schachtabdeckung den Kontakt mit der Kassette aufrecht, damit beim Wiederanheben der Kassette auch die Schachtabdeckung wieder geöffnet wird, wobei die Nase wieder auf der Kassette schleift. Damit sich die Nase dabei nicht verkeilen kann, mußte dafür gesorgt werden, daß die Schachtabdeckung bei eingeschobener und in Betrieb befindlicher Kassette noch ausreichend schräg stand. Das hatte zur Folge, daß die Schachtöffnung in diesem Zustand nicht richtig verschlossen war, so daß der Staubschutz nicht gewährleistet war.

### Vorteile der Erfindung

Der Anmeldungsgegenstand mit den Merkmalen des Anspruchs 1 hat folgenden Vorteil:

Dadurch, daß die Schachtabdeckung nun nicht nur bei entnommener Kassette, sondern auch bei eingeschobener und in Betrieb befindlicher Kassette vollständig geschlossen ist, ist der Staubschutz gewährleistet, und es kann verhindert werden, daß versehentlich Gegenstände in den Schacht fallen. Außerdem wird das Erscheinungsbild optisch verbessert, wenn der Schacht in Betrieb richtig geschlossen ist. Schließlich wird verhindert, daß sich die Schachtabdeckung auf der Kassette verhakt, wenn diese ausgeworfen werden soll.

Eine vorteilhafte Weiterbildung ist im Unteranspruch angegeben.

### Zeichnung

Ein Ausführungsbeispiel der Erfindung ist in der Zeichnung gezeigt und in der nachfolgenden Beschreibung näher erläutert. Es ist dargestellt in
Figur 1: ein Teilschnitt durch die Umgebung eines Schachtes, ausgestaltet nach der Erfindung, und
Figur 2: der entsprechende Teilschnitt nach dem Stand der Technik.

### Beschreibung des Ausführungsbeispiels

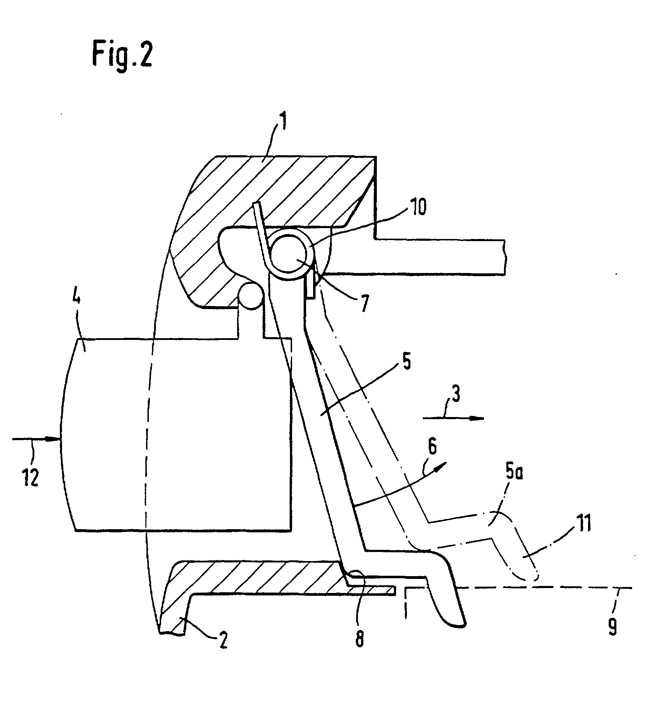

In Figur 2 ist zwischen zwei Teilen 1 und 2, die an der Frontseite eines Radiorekorders liegen, eine Schachtöffnung eines Schachtes zur Aufnahme einer einschiebbaren Kasssette vorgesehen. Eine Kassette läßt sich in Richtung eines Pfeiles 3 von links her einschieben. Die Kassette wird an einer Auswurftaste 4 vorbeigeschoben, die dabei im Hintergrund der Zeichnung bleibt. Beim Einschieben wird eine Schachtabdeckung 5 in Richtung eines Pfeiles 6 um einen Lagerzapfen 7 soweit hoch geschwenkt, daß die Kassette in den Schacht eingeführt werden kann. Dabei schleift die Kante 8 der Schachtabdeckung 5 auf der Oberseite der Kassette. Wenn die Kassette ihre Endposition in Richtung des Pfeiles 3 erreicht hat, wird sie soweit abgesenkt, daß ihre Oberseite das Niveau 9 erreicht. Die Schachtabdeckung 5 schwenkt getrieben durch eine Spiralfeder 10 nach unten, bis sie die mit unterbrochenen Linien angedeutete Lage 5a erreicht hat.

Es ist ersichtlich, daß bei dieser Konstruktion entsprechend dem Stand der Technik die Schachtabdeckung 5 die Schachtöffnung bei eingelegter Kassette nicht vollständig abschließt. Wird nach Betätigen der Auswurftaste 4 (in Richtung eines Pfeiles 12) über eine nicht dargestellte Mechanik das Auswerfen der Kassette veranlaßt, so hebt sich das Niveau 9 (Oberseite der Kassette) und bewirkt, daß die Schachtabdeckung 5a in Richtung des Pfeiles 6 geschwenkt wird. Dabei kann es allerdings mitunter geschehen, insbesondere wenn die Kassettenoberseite 9 nicht glatt ist (z.B. infolge eines Aufklebers), daß sich die auf der Kassette aufliegende Nase 11 der Schachtabdeckung 5 auf der Kassettenoberseite verhakt.

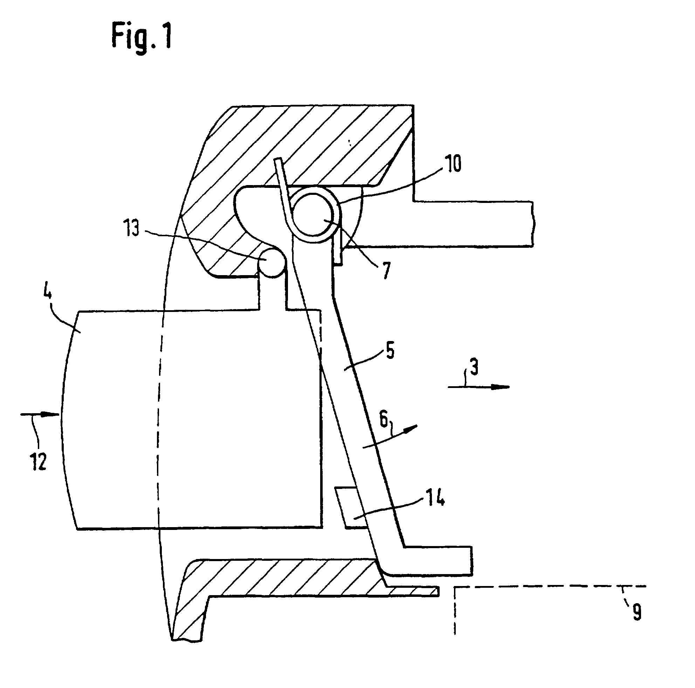

Bei dem Ausführungsbeispiel entsprechend der Erfindung nach Figur 1 sind diese Nachteile vermieden. Auch bei eingelegter Kassette (vgl. das Niveau 9 der Kassettenoberseite) wird die Schachtöffnung durch die Schachtabdeckung 5 unter der Wirkung der Spiralfeder 10 vollständig geschlossen. Wird die Auswurftaste 4 in Richtung des Pfeiles 12 betätigt und damit um einen Lagerzapfen 13 geschwenkt, so schlägt die Auswurftaste 4 gegen ein Anschlagelement 14 an der Schachtabedeckung 5 und schwenkt diese dadurch in Richutng des Pfeiles 6. Dabei bekommt die Schachtabdeckung 5 keinen Kontakt mehr mit der Oberseite 9 der Kassette, denn eine Nase (11 in Figur 2) fehlt hier. Die Schachtabdeckung 5 wird mittels der Auswurftaste 4 soweit nach oben geschwenkt, daß die Kassette entgegen der Richtung des Pfeiles 3 automatisch aus der Schachtöffnung ausgeworfen werden kann.

Die beiden Lagerzapfen 7 und 13 der Schachtabdeckung 5 bzw. der Auswurftaste 4 liegen in unmittelbarer Nähe beieinander. Dadurch führt das Anschlagelement 14 nur eine kurze Schleifbewegung auf der Auswurftaste 4 aus, wenn diese betätigt wird. Dabei sind nur geringe Reibungskräfte zu überwinden.

## Patentansprüche

1. Kassetten- oder Radiorekorder mit Laufwerk und mit
- Schacht zur Aufnahme einer einschiebbaren Kassette,
- schwenkbarer Schachtabdeckung (5), die so gestaltet ist, daß sie beim Einschieben der Kassette auf dieser schleift und nach deren Entnahme die Schachtöffnung federgespannt abdeckt,
- Auswurftaste (4) zum Auslösen des Auswerfens der Kassette,
wobei die Schachtabdeckung (5) so angeordnet ist, daß sie sich federgetrieben schließen kann, wenn die Kassette nach dem Einschieben durch Absenken auf das Laufwerk ihre Betriebsposition erreicht hat,
dadurch gekennzeichnet,
daß die Auswurftaste (4) und/oder die Schachtabdeckung (5) mit einem Anschlagelement (14) ausgerüstet ist, das geeignet ist, bei Betätigung der Auswurftaste (4) die Schachtabdeckung (5) soweit anzuheben, daß sie beim Auswerfen der Kassette mit dieser keinen Kontakt mehr hat.

2. Kassetten- oder Radiorekorder nach Anspruch 1, dadurch gekennzeichnet, daß sie Auswurftaste (4) schwenkbar gelagert ist, wobei sich deren Schwenkachse (13) in unmittelbarer Nähe der Schwenkachse (7) der Schachtabdeckung (5) befindet.

## Claims

1. Cassette recorder or radio/cassette recorder with a drive and with
- a shaft for accommodating a push-in cassette,
- a pivotable shaft covering (5) which is configured such that it slides over the cassette when the latter is pushed in and covers the shaft opening in a spring-stressed manner following removal of the cassette,
- an eject button (4) for triggering the ejection of the cassette,
it being the case that the shaft covering (5) is arranged such that it can close in a spring-driven manner when the cassette, once it has been pushed in, has reached its operating position by being lowered onto the drive, characterized in that the eject button (4) and/or the shaft covering (5) are/is provided with a stop element (14) which is suitable, upon actuation of the eject button (4), for raising the shaft covering (5) to such an extent that it no longer has any contact with the cassette when the latter is ejected.

2. Cassette recorder or radio/cassette recorder according to Claim 1, characterized in that the eject button (4) is mounted pivotably, the pivot pin (13) thereof being located in the immediate vicinity of the pivot pin (7) of the shaft covering (5).

## Revendications

1. Magnétophone à cassettes ou radiocassette avec mécanisme d'entraînement, comprenant :
• un logement pour accueillir une cassette par coulissement,
• un couvercle de logement (5) basculant, dont la constitution est telle qu'il glisse sur la cassette quand celle-ci coulisse et recouvre, sous tension élastique, l'ouverture du logement quand la cassette en est retirée,
• un bouton d'éjection (4) pour déclencher l'éjection de la cassette,
• le couvercle (5) du logement étant constitué de manière qu'il puisse se fermer par entraînement élastique, quand la cassette après avoir été introduite par coulissement, a atteint sa position de service en s'abaissant pour venir se placer sur le mécanisme d'entraînement,
caractérisé en ce que le bouton d'éjection (4) et/ou le couvercle (5) du logement porte un élément de butée (14) conçu pour, quand on actionne le bouton d'éjection (4), soulever le couvercle (5) suffisamment pour qu'il ne soit plus en contact avec la cassette.

2. Magnétophone à cassettes ou radiocassette selon la revendication 1,
caractérisé en ce que
le bouton d'éjection (4) est monté basculant et son axe de basculement (13) est à proximité immédiate de l'axe de basculement (7) du couvercle (5) du logement.
